# EUROPEAN PATENT SPECIFICATION

(11) **EP 4 515 155 B1**
(45) Date of publication and mention of the grant of the patent: **19.11.2025**
(21) Application number: 23721909.2
(22) Date of filing: 24.04.2023
(51) Int. Cl.: F24S 10/80, F24S 20/20, F24S 70/60

(54) **SOLAR RECEIVER WITH A POROUS ABSORBER**
SONNENEMPFÄNGER MIT EINEM PORÖSEN ABSORBER
RÉCEPTEUR SOLAIRE DOTÉ D'UN ABSORBEUR POREUX

(30) Priority: 26.04.2022 EP 22169935
(43) Date of publication of application: 05.03.2025
(73) Proprietor: EngiCer SA, 6828 Balerna (CH)
(72) Inventor: GIANELLA, Sandro, 6528 Camorino (CH); FERRARI, Luca, 6648 Minusio (CH)
(74) Representative: M. Zardi & Co S.A.
(86) International application number: PCT/EP2023/060678
(87) International publication number: WO 2023/208854

(56) References cited:
- EP-A1- 3 359 886
- WO-A1-2004/023048
- US-A- 4 018 211

## Description

### Field of application

The invention is in the field of solar receivers, particularly for use in concentrated solar applications.

### Prior art

In a concentrated solar application, the solar radiation is concentrated and collected with the goal of electrical energy generation or use as thermal energy for industrial processes or for chemical reactions. Typical concentrated solar systems include solar towers wherein a number of heliostats are arranged to direct the solar radiation to a common receiver (usually installed on a tower) and parabolic systems wherein the solar radiation is concentrated in a focal point or line.

In a concentrated solar system, the concentrated solar radiation is absorbed by a receiver. Receivers can reach a very high temperature of many hundreds of degrees or even above 1000 °C. The absorbed heat is transferred at such high temperature to a suitable medium, which is typically a liquid or a gas. The heated medium can be used as a heat source for example for an industrial process, for the production of electrical energy or for chemical reactions. The heated medium can be used as such or to transfer heat to another medium. For example, the heated medium can be used to produce steam for a steam turbine or, in some applications, the heated medium is air and the so obtained hot air can be directly expanded in a gas turbine. In other applications, the heat absorbed on the porous body of the solar receiver can be used for chemical reactions, for example for synfuel production.

A concentrated solar system needs a suitable device called solar receiver, which is arranged to absorb the concentrated solar radiation and be heated by said radiation, and to transfer heat to a flowing medium. In some concentrated solar systems, the solar receiver is made of a volumetric receiver, also called porous absorber or volumetric solar absorber, that is a porous material able to absorb the incident solar radiation and transfer the heat to a medium. The distinctive feature of a volumetric receiver is that the concentrated solar radiation is absorbed in the volume of the absorber, as the porous structure allows for penetration of the radiation. Desirable features of the absorber include, among others, open porosity, resistance to high temperature, sufficient mechanical strength, good absorption of the incident solar radiation and consequently a low power loss caused by reflection and a high efficiency in transferring the absorbed heat to a flowing medium.

In the current state-of-the-art, porous structures are regarded as best candidate for such volumetric receivers. Porous structures, also called cellular structures or lattice structures, are known and used for different industrial applications such as thermal insulation, structural applications, catalyst supports, heat exchangers and thermal energy storage. For application as volumetric receivers, porous structures having an engineered morphology appear particularly promising. The term engineered morphology identifies in particular the distribution of pores in the space, also named pore architecture or internal architecture. The thermal, optical and fluid-dynamic properties of such volumetric receivers are highly influenced by the morphological structure (including for example the pore distribution within the space) and, accordingly, there is an ongoing effort to identify the best structure for solar applications of interest.

A generally accepted classification of lattice structures is based on morphological characteristics. A first distinction is made between stochastic (random) and non-stochastic lattices. A stochastic lattice structure consists of irregular and non-periodic cells resulting in a network of interconnected struts, surfaces, and/or plates wherein it is not possible to identify distinct features that are repeated in space. The cells of a stochastic lattice are randomly distributed in space and have different topological structures and sizes. An example of stochastic lattice is a foam. Non-stochastic lattices are made up of unit cells with distinct, repeatable features. Non-stochastic lattice structures can be further classified based on organization and periodicity. Organization-driven classification refers to the cellular organization of the lattice and includes strut-based, surface-based, plate-based, and honeycomb lattices. Periodicity-driven classification categorizes non-stochastic lattices into periodic and pseudo-periodic lattices. The periodicity of a lattice refers to the type and size of the unit cells throughout the structure. Periodic lattice structures are composed by a periodic repeated arrangement of unit cells with a certain shape, topology, and size in three-dimensional space. Pseudo-periodic lattice structures are composed of unit cells with the same topology but with different sizes and shapes. Examples of pseudo-periodic lattice structures are conformal and warped lattice structures. Periodic and pseudo-periodic lattices can be further categorized into homogeneous or heterogeneous lattices. Homogeneity refers to the thickness of the unit-cell elements such as struts and walls, therefore homogeneous lattice structures have a uniform strut and/or wall thickness and heterogeneous lattice structures have gradients in the strut and/or wall thickness.

Pseudo-periodic lattice structures and heterogeneous periodic lattice structures are part of a class of materials called functionally graded materials (FGM). Generally, FGM include all materials that present a variation in composition and/or structure over volume, resulting in corresponding changes in the properties of the material. The properties may change either continuously or in a discontinuous manner. With regards to the morphological characteristics of a lattice structure, a discontinuous FGM, also called discrete or layered FGM, is a lattice structure in which the structure changes in a stepwise mode, usually with the presence of an interface. A stepwise, or discontinuous change, is present when zones with different properties can be clearly identified. In contrast, a continuous FGM is characterized by a continuous change in structure with no clear separate zones and interfaces.

Relevant parameters of a lattice structure include, among others, the cell topology, cell morphology, the cell size, and the thickness of the cell elements such as struts and walls. The are many different cell types, including strut-based cells like kelvin, diamond, cubic, icosahedron, surface-based cells like gyroid, primitive, Schwarz diamond, honeycomb cells, among many others. The cell size is commonly defined by the values for width, length and height.

For several applications, the lattice structure properties of porosity and specific surface area are important. The porosity is defined as the ratio of void volume to the total volume of the structure. The specific surface area is the ratio of the total surface area to the total volume. For other applications, mechanical properties may be more important, such as compression and bending strength. In the case of volumetric receivers, as the structure must absorb the solar radiation to which it is directly exposed, also the optical properties of the structure play an important role. In particular, a high penetration of solar radiation into the volumetric receiver is regarded as beneficial for the heat exchange efficiency of the absorber.

Volumetric absorbers with a lattice structure can be made of several materials, including among others metal alloys, composites or ceramic and are obtainable, for example, by replica technique, extrusion, molding or additive manufacturing.

EP 3 359 886 discloses a volumetric solar receiver with hollow cells distributed over multiple levels. In a direction orthogonal to a face exposed to the solar radiation, the hollow cells of one level are smaller in size than hollow cells of the previous level, thus providing a stepped variation of the pore size of the receiver. It is suggested that said variation of the pore size allows a higher penetration of the solar radiation and better transfer of energy from the solar radiation to the absorber. However, the stepped variation introduces a number of boundary regions (e.g. surfaces) within the structure of the receiver wherein the properties of the body change suddenly across the boundary region, i.e. show a discontinuity. These regions of discontinuity may represent structurally weak points exposed to the risk of local concentration of stress and failure of the assembly in particular in case of rapid temperature changes or in the presence of high temperature gradients within the structure. Furthermore, the regions of discontinuity may be affected by a poor heat exchange coefficient with the risk of local overheating.

Known lattice structures for volumetric receivers include structures based on the repetition of a unit cells, possibly with a variation of cell size within the structure, wherein the variation is obtained by assembling several lattice structures of each desired cell size to form a compound structure. Such a compound structure may provide a different cell size in different regions, however with the presence of discontinuous transitions from one structure to another (discontinuous FGM) and the drawbacks indicated above, i.e. possible formation of weak points and/or hot spots.

Still another known lattice structure is a stochastic lattice named Voronoi after the mathematical concept of Voronoi tessellation of space. This structure may also offer a variation of the cell size along a defined direction, however its intrinsic random arrangement of cells may create regions of hot spots or accumulation of stress in a substantially unpredictable manner.

Hence there is still the need to provide an optimized structure for volumetric receivers for concentrated solar systems.

### Summary of the invention

The invention aims to provide a novel structure of volumetric solar receiver to increase the capture of concentrated solar radiation and to increase the heat transfer efficiency to a fluid medium such as gas or liquid crossing the absorber.

Particularly, the invention aims to avoid the above-mentioned drawbacks of discontinuous features in the structure of the porous absorber.

The above aims are reached with a solar receiver according to claim 1. Certain preferred features are stated in the dependent claims.

The invention provides an absorber including at least one region having a lattice structure, wherein said lattice structure is made of a repetition in space of basic elements, the basic elements are connected to each other to define units of the structure, and the number of basic elements per unit is constant throughout said lattice structure. The units may be for example cells of a given morphology. Said units form orders next to each other according to a penetration depth of the incident solar radiation in the structure. Said depth in the structure may be regarded as a distance from a surface exposed to the solar radiation. The units are more densely arranged according to the depth in the structure and any element in common between adjacent units is shared entirely and not only partially.

Accordingly, for each pair of said orders comprising a first order and a second order next to each other, the second order being deeper than the first order in the structure, the following conditions are satisfied:
in the second order, that is deeper than the first order, the units are more densely arranged than in the first order, so that the second order has a number of units per length or number of units per volume which is greater than the first order, and
each unit of the first order has one or more basic element(s) which is shared with a unit of the second order wherein the one or more shared basic element(s) are shared along their entire extension between said units.

The above two conditions identify a structure which can be named pseudo-periodic. The structure has a continuity in the lattice pattern with no discontinuous change in morphology; the basic elements are connected to each other through the structure with continuity. The units of the structure can be unitary cells. According to the second condition above, any basic element which is shared between two units is shared entirely, to avoid that two basic elements intersect or connect at an intermediate location. This feature provides a continuity in the structure and avoids singularities which may become weak points of the structure.

### Description of the invention

A solar receiver according to the invention has at least one region with a peculiar lattice structure. The lattice structure of the invention is based on a repetition of basic elements, wherein the size of unitary cells delimited by said basic elements vary throughout the structure. Accordingly, the structure can be regarded as a pseudo-periodic structure.

According to the invention, the basic elements are connected to each other to define unitary cells of the structure, wherein the number of basic elements and the number of connections and/or intersections between such basic elements, per each individual cell, is constant throughout the structure. Each individual cell is connected to at least one neighboring cell in at least one point. Additionally, there is at least one direction according to which the spatial arrangement of the basic elements and/or a size of the basic elements is modified to obtain a deformation of the unitary cells so that the individual volume of the cells decreases continuously along said direction.

Said direction may be regarded as a gradient of the size of the cells, as the cells become smaller along said direction. Said gradient direction points away from an outer region of the absorber, which is a region arranged to be exposed to the solar radiation when the receiver is in operation. Accordingly, the size of the cells decreases towards the inner of the absorber, i.e. the cells are larger in outer regions more exposed to the solar radiation and smaller in inner regions which receive less radiation.

The cells are delimited by a repetition in space of said basic elements, which may be regarded as elementary building blocks of the structure. The structure can be termed pseudo-periodic because the general topology of the cells (i.e. number of basic elements and related connections) per cell is invariant, although the shape and size of the cells may vary. Particularly the cells may be stretched, tapered or deformed throughout the structure.

The cells may be deformed in the above-mentioned gradient direction, whereas the continuity of the structure is preserved by the continuous distribution in space of the basic elements. The individual cells are connected to each other with a constant number of connections, and the location of the intercellular connection of two neighboring cells is the same, thus creating a continuous pattern without discontinuity.

In other embodiments said gradient is understood in terms of distance from a surface exposed to the incident solar radiation, or depth of the structure. In certain embodiments, the structure may be symmetrical around an axis and may be easier to represent with polar coordinates, such as cylindrical coordinates. For example, the distance from the receiving surface may be a radius in a cylindrical system.

A remarkable feature of the above defined pseudo-periodic lattice structure is the absence of regions of transition from one cell size to another (continuous FGM). Hence the invention avoids the drawbacks of structures resulting from assembly of parts, as explained above (discontinuous FGM). On the other hand, the structure maintains a higher degree of continuity compared to stochastic structures. Accordingly, the invention avoids the inherent drawbacks of randomly arranged foam-like or stochastic structures.

The applicant has found that the provision of such cell size gradient and the continuity of the lattice structure in combination with larger cells in the proximity of the outer region exposed to the solar radiation and smaller cells in the internal regions of the absorber improve the penetration of the solar radiation into the cellular structure, reduce back radiation, and improve mechanical resistance of the assembly. The fluid dynamic behavior of the system is also improved reaching a more suitable behavior for the intended application. The heat transfer efficiency between the porous element and the heat exchange medium that crosses the assembly is finally increased.

The solar receiver of the present invention can be used for various applications of concentrated solar technology, where a flowing medium is heated at high temperature (possibly greater than 1000 °C) and used for example for the production of electrical energy or as a heat source for a process, for example in heat demanding industrial processes or chemical reactors that require heat to carry out endothermic reactions.

The flowing medium is preferably a gas or a liquid and more preferably is air. A stream of air can enter the porous absorber and heated to a suitable high temperature. The porous absorber absorbs heat from the incident solar radiation and transfers heat to the medium.

Said basic elements of the structure may include substantially mono-dimensional like linear elements or substantially bi-dimensional. Examples of substantially mono-dimensional elements are ligaments or struts. Examples of substantially bi-dimensional elements are surface-based structures. The connections between basic elements may include nodes where two or more basic elements converge and/or intersection lines between surfaces.

Preferred embodiments of the invention include a porous absorber with a strut-based pseudo-periodic structure or with a truss-based pseudo-periodic structure or with a surface-based pseudo-periodic structure.

An interesting embodiment of the invention is a strut-based structure wherein the basic elements are linear elements connected at their ends, to form nodes. The nodes delimit unitary cells of a given morphology, such as cubic cells or cells of a more elaborate shape. The cells are stretched or tapered so that their size decrease with the depth in the structure (penetration depth of the incident radiation); adjacent cells may share one or more struts and shared struts are entirely in common between adjacent units, so that all struts connect at their end points.

In a strut-based structure, each node constitutes an end point of a linear element and a vertex of a cell. Accordingly, the structure has no node which is at an end point of a basic linear element but no at a vertex of a cell, as such node would constitute a discontinuity in the structure.

Particularly preferably, each of said unitary cell is one of the following: a cubic cell, a parallelepiped cell, a diamond cell, an octahedron cell or a kelvin cell, an octahedron, a truncated octahedron, a gyroid, a triply periodic minimal surface-based cell. The above examples represent non-limiting examples.

The modification of the basic elements to decrease the size of cells may include any of: a uniform scaling, a non-uniform scaling, a deformation, a rotation or combinations thereof.

Preferably, each of said cells has linear dimensions comprised between 1 mm and 30 mm.

The unit cells may define the pore morphology and size, e.g. the pores are formed by voids between the structural elements, such as linear struts, that define the boundaries of the cells. The morphological characteristics of the lattice structure vary in a continuous way by varying spatial arrangement and size of the basic elements of the unit cell but keeping the same unit cell topology, as opposed to discontinuous or step-wise gradient, in which sections of a lattice structure with equal cell morphology but different cell sizes are assembled creating a discontinuity in the lattice pattern.

The continuous gradient may be achieved by realizing the porous absorber with a structure wherein unit cells are deformed, for example tapered, in at least one direction. For instance, using a reference cartesian coordinate system comprising an X, Y and Z-axis wherein the Z-axis is perpendicular to said outer region of the porous element, the unit cells may be deformed along one of said axis. Preferably, the unit cells are deformed along X-and Y-axis so to obtain a continuous cell size gradient along the Z-axis. More preferably, the unit cells are non-uniformly scaled along the X-, Y- and Z-axis.

The cell size may influence also the porosity of the absorber. Although the cell size and the porosity are distinct features, the variation of the cell size may, and in most case does, cause a corresponding variation of the porosity. According to the periodicity driven classification, homogenous structures are characterized by having a uniform strut and/or wall thickness. In such structures, a change in the cell size causes a change in the porosity, resulting in larger porosity in regions with larger cells and lower porosity in regions with smaller cells. Heterogeneous lattice structures have gradients in the strut and/or wall thickness, so it is theoretically possible to vary the cell size and keep the porosity constant by reducing the strut/wall thickness. The pore size of the absorber is preferably between 50% and 95%.

Said outer region of the absorber may be for example a surface of the absorber exposed to the concentrated solar radiation. In some embodiments the gradient direction according to which the size of the unit decreases, is a direction perpendicular to the incident solar radiation.

The porous absorber can be made, among others, by molding, replica technique or with an additive manufacturing technique. The additive manufacturing shaping process may be performed directly from a CAD file.

Particularly, the porous absorber may be made of any of: a metal, a metal alloy, a composite, a ceramic material, the ceramic material being preferably silicon carbide.

The porous element can be manufactured with various materials or alloys depending on the final application of the solar receivers. Preferably, for high-temperature applications the porous element is made of ceramic and more preferably is made with silicon carbide.

### Description of the figures

Fig. 1 shows a schematic representation of a solar receiver according to an embodiment of the invention.
Fig. 2a is a cross section view of a lattice structure with a stepwise change of the cell size through layers of an absorber of the prior art.
Fig. 2b is a cross section view of a lattice structure with a continuous pattern with cell size reduction in a preferred direction which is in accordance with an embodiment of the invention.
Fig. 2c is a 3D model of a discontinuous functionally graded material according to prior art.
Fig. 2d is a 3D model of a continuous functionally graded material in accordance with an embodiment of the invention.
Fig. 3 illustrates the structure of a porous absorber according to an embodiment of the invention wherein the unit cells of the absorber are diamond cells.
Fig. 4 illustrates the structure of a porous absorber according to an embodiment of the invention wherein the unit cells of the absorber are octahedron cells.
Fig. 5 illustrates the structure of a porous absorber according to an embodiment of the invention wherein the unit cells of the absorber are Kelvin cells.
Fig. 6a illustrates one exemplary deformed Kelvin cell of the structure of Fig. 5.
Fig. 6b illustrates one regular Kelvin cell that can be used in a periodic lattice structure or in a discontinuous functionally graded material.
Fig. 7 illustrates an example of a surface-bases periodic cellular structure of the so called gyroid cell type.
Fig. 8 is a sectional view of a solar receiver according to an embodiment.
Fig. 9 is a sectional view of a solar receiver according to another embodiment.

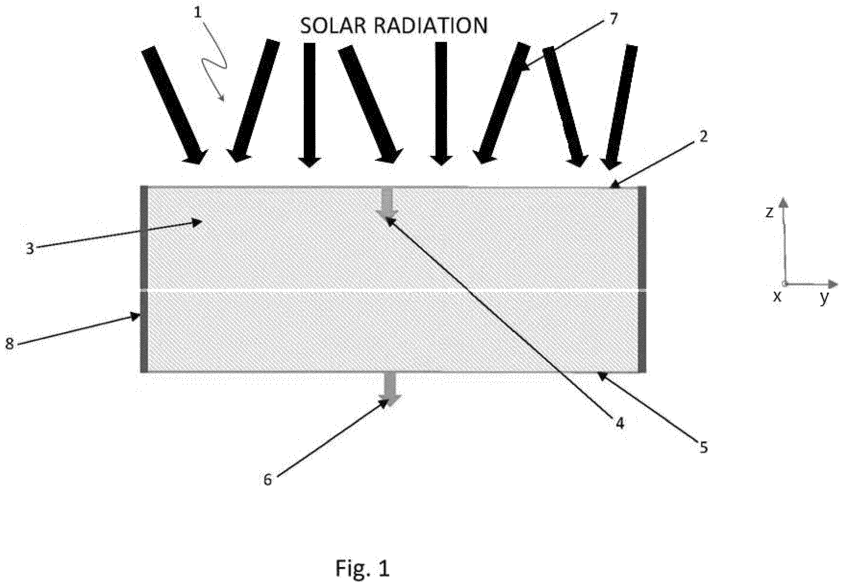

Fig. 1 illustrates a volumetric receiver 1 comprising a body 8 and a porous absorber 3 with a receiving surface 2 exposed to the incident solar radiation 7.

The solar radiation 7 may be a concentrated solar radiation wherein concentration is performed with known techniques such as the use of parabolic dish concentrators or an array of heliostats.

The body 8 in the present embodiment is represented for simplicity with a rectangle box but depending on the specific solar receiver design the body 8 may have other shapes.

The porous absorber 3 is contained within the body 8 and is crossed by a flowing medium 4 that enters the receiver 1 via the receiving surface 2 and leaves the receiver via an outlet surface 5 as a hot medium 6.

The receiving surface 2 is directly exposed to the incident radiation 7, so that the porous absorber 3 can be heated by the radiation 7 and transfer heat to the medium 4.

The porous absorber 3 is at least in part made with a pseudo-periodic lattice structure and has a continuous functional gradient with reference to its structure in the negative direction of the Z-axis. The size of the cells of the absorber 3, accordingly, decreases along the above-mentioned direction from the receiving surface 2 towards the outlet surface 5 without a discontinuity in the lattice pattern.

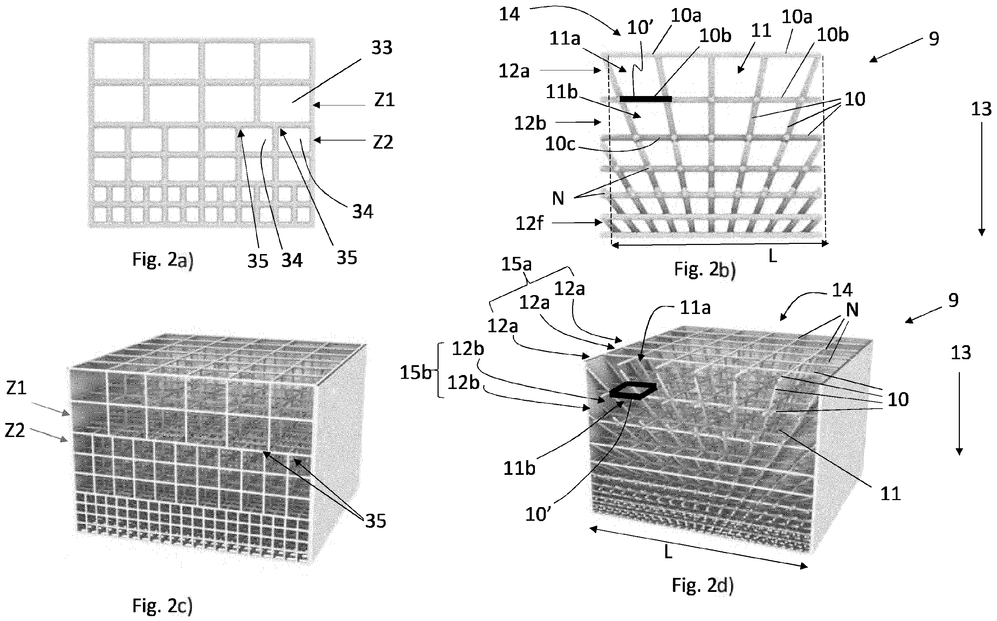

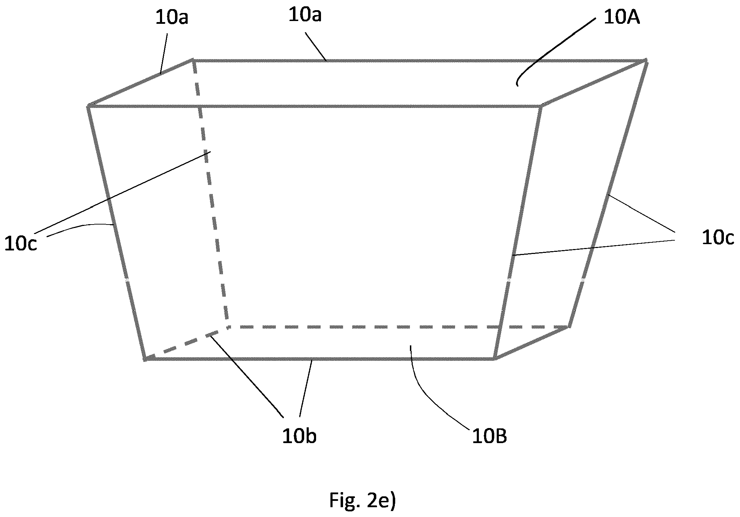

For a better understanding of the continuous functional gradient of the invention, reference can be made to Fig. 2 wherein Fig. 2a and Fig. 2c illustrate a discontinuously graded structure and Figs. 2b, 2d illustrate a continuously graded structure.

Figs. 2a and 2c illustrate an example of cell size variation obtainable with an assembly of structures wherein each zone of the structure has a constant cell size, according to the prior art. The cell size is constant across each zone and decreases from one zone to the next thus resulting in a stepped variation across the porous absorber.

Steps between zones Z1 and Z2 are indicated in the strut-based structure of Fig. 2a and Fig. 2c. The steps are formed where a size of a cell 33 located in a zone Z1 is not equal to the size of a cell 34 in the next zone Z2, and therefore a discontinuity in cells size is formed between zones of the structure. For example, Fig. 2a illustrates that two cells 34 in the zone Z2 are adjacent to a single cell 33 in zone Z1 and, consequently, intersections 35 are formed at intermediate points of struts.

Hence the functionally graded material is said to be discontinuously graded because the morphological characteristics are constant within a zone but vary suddenly when passing from one zone to another. An interface is clearly recognisable with a stepped variation which, as above discussed, may lead to the formation of weak points wherein the thermal and/or mechanical stress can accumulate potentially leading to the failure of the component and leads to sub-optimal heat exchange.

By comparison, the structure of Figs. 2b and 2d, which is in accordance to an embodiment of the invention, has no such discontinuity and no intermediate intersection like the intersections 35 of the prior-art structure. These embodiments will be further described below.

The lattice structure of the present invention provides a continuous change in the morphological characteristics along a preferred direction according to an embodiment of the present invention. The continuity of the lattice pattern is preserved, and the size of the cells decreases within the structure without a locally concentrated variation at the interface between zones. Hence the functionally graded material is said to be continuously graded because the morphological characteristics are changing in a continuous way without separate zones and interfaces. The size of cells is greater in the proximity of the outer surface exposed to the solar radiation, and decreases within the structure of the absorber away from the surface exposed to the solar radiation such as the surface 2 in the figures.

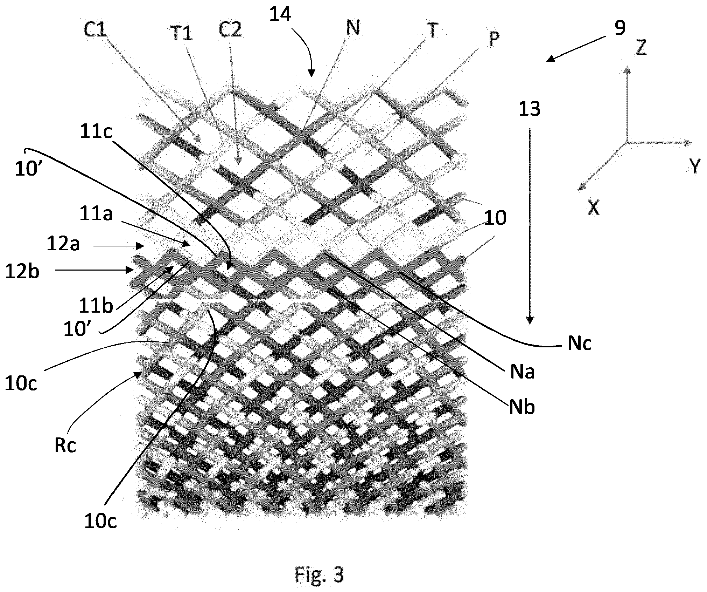

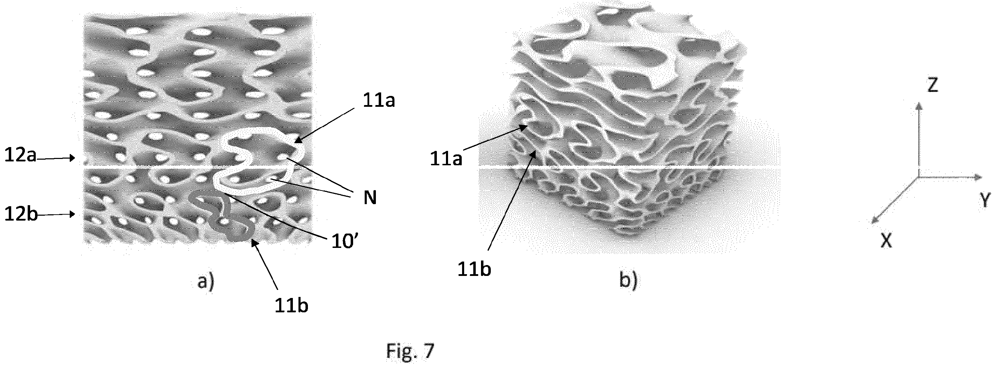

Figs. 3 to 7 illustrate examples of the structure of a porous absorber of a solar collector according to various embodiments of the invention. Figs. 3 to 6 disclose strut-based structures, whereas Fig. 7 is an example of a surface-based structure.

Fig. 3 shows a lateral view of the structure of a porous absorber made of diamonds unit cells. In the figure, the unit cells are arranged to create a continuous lattice pattern with cell size gradient in the negative direction of the Z-axis. The vector 13 in Fig. 3 denotes the direction of the cell size gradient.

The diamond unit cells of Fig. 3 are made by linear elements or struts T which are interconnected at nodes N. Each cell shares a strut T with an adjacent next cell, for example the cells C1 and C2 share the strut T1. Each cell defines a pore P of the porous body of the absorber. In accordance with the gradient 13, each cell is smaller than cells upstream and larger than cells downstream, e.g. the cell C2 is smaller than the cell C1, and consequently the pores P become smaller according to the direction of the gradient 13.

It can be appreciated in Fig. 3 that the continuity of the structure is preserved despite the variation of the cell size, because the cells are interconnected to each other by the struts T. The cell size varies in the upstream-downstream direction identified by the gradient 13. The structure does not have macroscopic boundaries of transition between regions with different pore sizes.

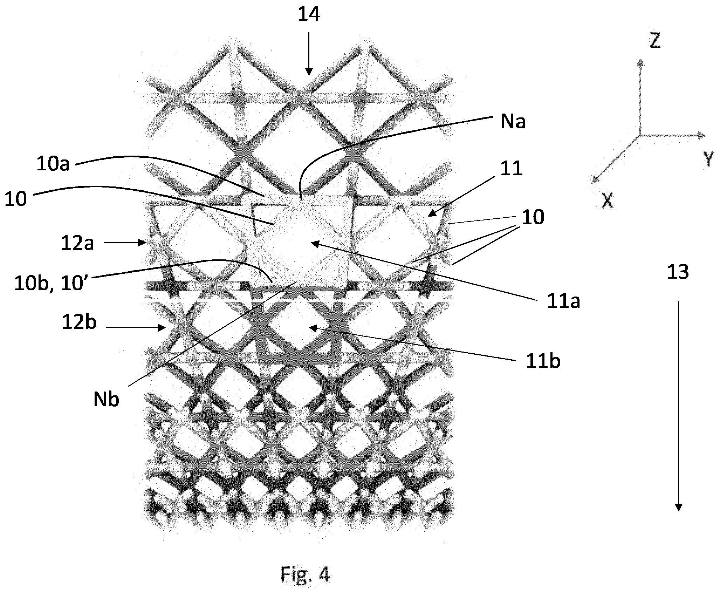

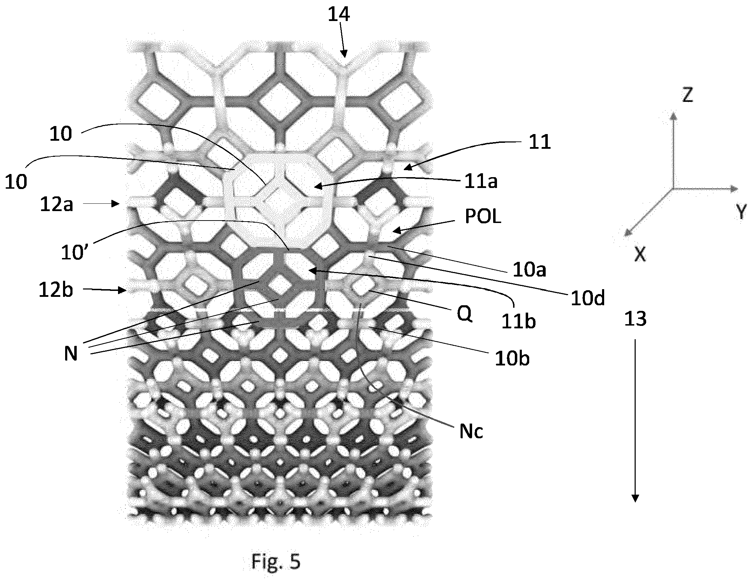

Fig. 4 and Fig. 5 show, similarly to Fig. 3, an embodiment with octahedron cells and an embodiment with Kelvin cells. Also in these embodiments, each cell shares at least one strut with an adjacent cell so that the structure has an overall continuity, and the cells and pore size become smaller in the upstream-downstream direction of the gradient 13, which in the examples is still the negative-Z.

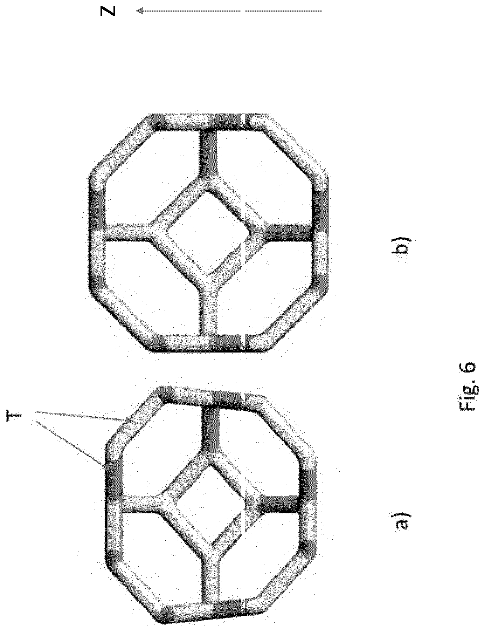

Fig. 6a illustrates one exemplary deformed Kelvin cell of the structure of Fig. 5. Fig. 6b illustrates one regular (non-deformed) Kelvin cell used in a periodic lattice structure or in a discontinuous functionally graded material. Particularly, the cell of Fig. 6a is stretched in the Z direction compared to the cell of Fig. 6b.

Fig. 6 provides an example of a cell deformation in the gradient direction, suitable to obtain a continuous variation of the cell size within the structure of the absorber 3.

Fig. 7a provides a cross section view of a porous element made with a surface-based cellular structure comprising a plurality of gyroid unit cells. Fig. 7b provides a 3D model of the same gyroid unit cell. As in the previous embodiment, the gyroid unit cells are arranged to create a cell size gradient in the negative direction of the Z-axis by preserving the lattice pattern, i.e. with no discontinuity.

The lattice structure 9 is hereafter disclosed in more detail with reference to Figs. 2b, 2d, 2e, 3-7.

The lattice structure 9 is made of a repetition in space of basic elements 10, wherein the basic elements 10 are connected to each other to define units 11 of the structure 9, and the number of basic elements 10 per unit 11 is constant throughout the lattice structure 9.

In the example of Fig. 2b, each unit 11 is formed by four basic elements 10 in the form of struts. The basic elements 10 are connected at connection points N to define quadrangular shapes having upper basic elements 10a and lower basic elements 10b (of the basic elements 10) disposed in parallel. The units 11 are arranged in a plurality of rows such as the rows 12a, 12b, wherein upper basic elements 10a and lower basic elements 10b of units 11 in a same row 12a are aligned. Hence the orders of the units 11 are represented, in this embodiment, by rows such as the rows 12a, 12b.

In the example of Fig. 2d, each unit 11 is formed by twelve basic elements 10. A magnified view of one unit 11 is represented in Fig. 2e. Four upper basic elements 10a and four lower basic elements 10b delimit, respectively, an upper quadrangular face 10A and a lower quadrangular face 10B. Said faces 10A, 10B are parallel to each other and connected by the remaining four basic elements 10c of the unit 11.

The units 11 are ordered in a plurality of rows 12a, 12b, wherein the upper quadrangular shapes 10A and lower quadrangular shapes 10B of units 11 in each row are coplanar. The plurality of rows are further ordered in columns such as columns 15a, 15b to form matrixes of units 11.

Whereas a parallelism and coplanarity is defined in the patterns of units 11 of Figs. 2b and 2d, patterns of basic elements 10 has not (necessarily) constrains of this type.

In Fig. 3, for instance, each unit 11 still includes four basic elements 10 as struts, defining quadrangular shapes. However, basic elements 10 are not arranged in parallel. To the contrary, units 11 are in ordered such that upper vertexes Na and lower vertexes Nb of units 11 in each row 12b are aligned along an upper line and a lower line of the order, and intermediate vertexes Nc are aligned along an intermediate line. Upper vertexes Na and lower vertexes Nb of units 11 in each row 12b are aligned. Preferably, each one of the basic elements 10c of one unit 11 has a radius of curvature Rc in common with other basic elements 10c of units 11 not belonging to the same row 12b.

In the embodiment of Fig. 4, the lattice structure 9 of Fig. 2b and Fig. 3 are overlapped so as the vertexes Na, Nb (of the lattice structure 9 of Fig. 3) are aligned on upper basic elements 10a and lower basic elements 10b of the lattice structure of Fig. 2b. The units 11 of the resulting lattice structure 9 of Fig. 4 includes therefore eight struts 10.

Fig. 5 is an example wherein each unit 11 includes sixteen basic elements 10 (struts). Eight basic elements 10 are connected to define polygons POL, wherein, similarly to the embodiment of Fig. 2b, upper basic elements 10a and lower basic elements 10b are parallel and the units 11 are ordered in a plurality of rows (or orders) 12a, 12b, wherein the upper basic elements 10a and lower basic elements 10b of units 11a in each row 12a are aligned. The remaining eight basic elements 10 define a quadrangular shape Q inside the polygon POL, which is connected to the sides 10 of the polygon POL by means of connecting struts 10d. Said connecting struts 10d extend, preferably, between a middle point of one side 10 of the polygon POL to a vertex Nc of the quadrangular shape Q.

In the description provided above with reference to Figs. 2 to 5, the orders of units have been disclosed as rows, for easy of explanation. In the example, units 11 are arranged to form orders 12a, 12b of units 11 next to each other. However in other embodiments of the invention the orders may represent different arrangements other than rows, such as layers in the structure.

The orders 12a, 12b next to each other are arranged according to a depth 13 of the structure 9, wherein the depth is a distance from a surface 14 exposed to the solar radiation 7.

According to Fig. 2d, for instance, the units 11 are arranged in the orders 12a, 12b based on the depth 13 from the surface 14. The same may apply to other embodiments.

Each pair of orders 12a, 12b, comprising a first order 12a and a second order 12b next to each other, with the second order 12b deeper than the first order 12a, satisfies the following:
a) in the second order 12b, that is deeper than the first order 12a, the units 11 are more densely arranged than in the first order 12a, so that the second order 12b has a number of units 11 per length or number of units 11 per volume which is greater than the first order 12a,
b) each unit 11a of the first order 12a has one or more basic element(s) 10' which is shared with a unit 11b of the second order 12b wherein the one or more shared basic element(s) 10' are shared along their entire extension between said units 11.

Accordingly, the lattice structure 9 is continuous. Indeed, no steps is formed between units of an order and unit of a deeper (next order). The unit of an order ends exactly where the unit of the next order starts, sharing with it the basic elements, and therefore not involving further units in the direction of depth of the structure. At the same time, due to the greater density at the next order, a size of the units is decreased in the direction of depth.

This is achieved for instance with units having a shape which is tapered in the direction of depth. For instance, with reference to Fig. 6b, a unit includes basic elements are arranged to delimit in the periphery of the unit a regular octagon which is not adapted to satisfy the condition of the present invention.

Figure 6a, instead, schematically represents a unit including basic elements delimiting in the periphery of the unit an octagon with a tapered shape, wherein a length of a first basic element (the top element in the drawing) forming the octagon is more than the length of an opposed second basic element (the bottom element) of the octagon. Therefore, the unit as represented in Fig. 6a is suitable to be a unit of an order according to the present invention, since the second basic element (bottom element) of the unit may be shared with a unit of next order (not represented), in its entire length, becoming the top element of the unit of the next order, with no discontinuities between the units.

As to the density, considering for instance the embodiment of Fig. 2b, given a reference length L in the lattice structure 9, the order 12a includes four units 11 within said length L and the order 12b, which is deeper than the order 12a, includes five units 11 in the same length L. Considering element sharing, the unit 11a of the first order 12a has one basic element 10' which is shared with the unit 11b of the second order 12b along its entire extension between the units 12a, 12b. The shared element 10' has a length smaller than a length of the parallel basic elements 10a in the unit 11a and greater than a length of the parallel basic element 10c in the unit 11b.

In embodiment of Fig. 2d, given the length L per volume in the lattice structure 9, the order 12a includes six units 11, whereas the order 12b, which is deeper than order 12a, includes eight units 11 (density). The unit 11a of the first order 12a has one basic element 10' which is shared with the unit 11b of the second order 12b along its entire extension between the units 12a, 12b (element sharing). In this embodiment, a plurality of element 10' are shared, in particular four elements. The four shared basic elements define a quadrangular shape. The quadrangular shape is shared among units 11a and 11b. The shared quadrangular shape has an area less than an area of the parallel quadrangular shape in the unit 11a and more than an area of the parallel quadrangular shape in the unit 11b. Therefore, element(s) sharing may include more than one basic element or more complex structure.

In the embodiments of Fig. 4, it may be appreciated that the density (number of units per length) increases with the depth 13 of the structure 9. Moreover, each unit 11a in a row 12a shares two basic elements 10' with two adjacent units 11b, 11c belonging to a next, deeper row 12b. The conditions a), b) mentioned before are satisfied in the example of Fig. 5 as well, being a superimposition of embodiments already disclosed.

As to the example of Fig. 6, a basic element 10' is at the bottom side of the polygon POL of the unit 11a in the row 12a, and corresponds to the top side of the polygon POL of the unit 11b in the row 12b, next and deeper row 12a. the term row here is used instead of the more generic term "order", since sort of rows 12a, 12b may be easily identified in Fig. 6.

Preferred featured of the lattice structure 9 are disclosed below.

Each unit 11 includes a plurality of connections N between basic elements 10 of the unit 11, and the number of connections N inside each unit 11 is the same. In other words, the basic elements 10 have a same "intra-connection" (the connection inside the unit).

In the embodiment of Fig. 2b four connections N are provided; in the embodiment of Fig. 2d, eight connections are provided; in the embodiment of Figs. 3 to 5, respectively, four, eight and sixteen connections are provided. The same number of basic elements and connections per units allows to keep a same morphology for units at different depth.

In a preferred embodiment, each first unit 11 in the first order 12a and each second unit 11 adjacent to said first unit 11 in the same order 12a are connected to each other. In the embodiment of fig. 2b, connection of two units at same order is made by means of a basic element 10 shared between the units 11 in said same order, in particular by sharing the entire length of the basic elements 10. The same apply to the embodiment of Fig. 2d, wherein however the connection of two units 11 at same order is made by means of a plurality of basic elements 10, forming a quadrangular shape which, is therefore also a shared shape between the two adjacent units 11 at the same order 12a.

All the basic elements 10 of a unit 11 may be also shared with basic elements 10 of other units 11, at same order of at different orders. This may be immediately appreciated from Figs. 1 to 3, for instance. Sharing all the elements increases heat transmission uniformity in the direction of depth of the structure and along the extension of each order 12a, 12b.

When not all the basic elements 10 of one unit 11 are shared with other units, such as for instance in the example of Figs. 4, 5, preferably, the number of basic elements 10 shared with the other units 11 in the same or in a different order(s) is the same. Moreover, the number of connections N of a unit 11 with other units 11 in the same or in different order(s) is the same. This feature is also said "inter connection" (connection outside the unit). For instance, each unit 11 in the example of Fig. 4 shares four basic elements 10 with adjacent cells (taken from units at the same and/or different orders) and eight connections; each unit 11 in the example of Fig. 5 shares eight basic elements 10 with adjacent units 11 (taken from the same and/or different orders) and sixteen connections.

The examples above are disclosed mainly with reference to basic elements 10 in the form or struct or rectilinear elements.

The basic elements 10 within the meaning of the present invention may also include surface elements. This is for instance the case of the non-limiting example of Figs. 7a and 7b. As schematically represented in the cross section of Fig. 7a, orders 12a and 12b are defined wherein, in each order 12a or 12b, a plurality of units 11 are arranged. The density of units 11b in the next order 12b, i.e. in the order 12b at a greater depth than order 12a, is greater than the density of units 11a in order 12a. The units 11a, 11b are formed by surface elements 10, for instance curved. The surface elements 10 are connected in a same unit 11a by means of connection lines N or border regions N. The number of connection lines N among surface elements 10 per unit 11 is preferably the same. The unit 11 of an order 12a is connected to the unit 11b of the next order 12b by means of at least one surface element 10. The surface element 10 is shared among the units 11a and 11b on its overall surface extension.

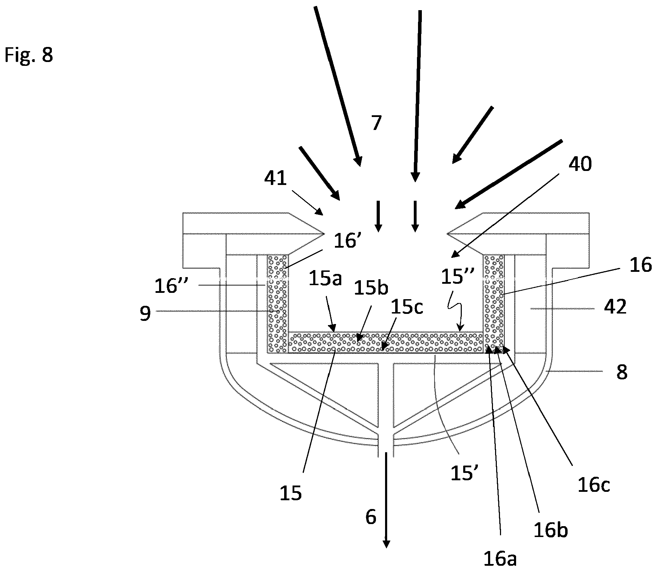

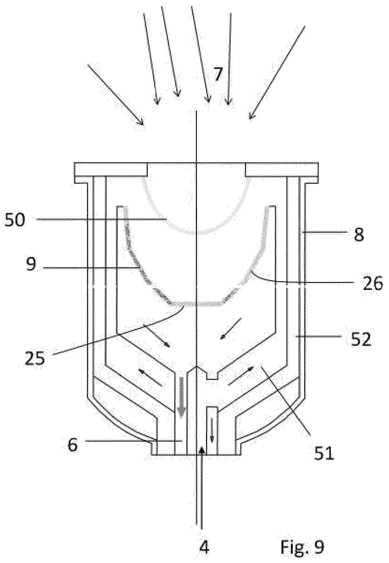

As to the arrangement in the solar receiver 1, the lattice structure 9 may be located in one single region of the absorber 3 (Fig. 1) or in a plurality of regions (Figs. 8 and 9).

Figures 8 and 9 are examples of arrangement of the lattice structure 9 in the absorber of the solar receiver 1, wherein the flowing medium 4 enters through an inlet and exit through an outlet as a hot medium 6, defined in the body 8 of the solar receiver 1.

In the example given with reference to the cross section of Fig. 8, the lattice structure 9 is a cylindrical structure arranged in a cavity 40. The solar radiation enters through an aperture 41 of said cavity 40. The structure 9 includes a base 15 distanced from said aperture 41, and an annulus 16. The structure 9 is contained in a body 8 with thermal insulation 42.

In the base 15 the orders of the units 11 may be vertically arranged such as orders 15a, 15b and 15c. For example, units 11 of an order 15a are closer to a top surface 15" of the base portion 15 (closer to the inlet), and units 11 of the orders 15b or 15c of higher density are closer to the bottom part 15' of the base 15 (closer to the outlet). The depth of an order can be regarded as the distance from the surface 15" exposed to the solar radiation.

In the side annulus 16 the orders of units 11 may be radially arranged such as orders 16a, 16b and 16c. The orders may be regarded as crowns or cylindrical layers. The depth of an order in this case is the distance from an inner surface 16" of the annulus 16, which is exposed to the solar radiation entering the cavity 40. Thus, units 11 of a next order 16b of higher density are closer to an outer surface 16' of the annulus 16, and units 11 of the order 16a of lower density are closer to the inner part 16" of the annulus 16.

Another arrangement of orders is disclosed for instance in Fig. 9. Here, the structure 9 is contained in a body 8 with thermal insulation layer 52 and the solar radiation enters from above via a window 50. The structure 9 includes a disc-like portion 25 and a side portion 26. The side portion 26 includes segments having a different inclination with respect to the portion 25. The thermal fluid travels through channels 51 made in the body 52. The orders of the units in the structure may be in accordance with a radial distance from the window 50 or in accordance with the thickness of the structure 9 in both portions 25 and 26.

In general, the orders of units in the absorber structure 9 may be adapted based on the structure of the body 8 and/or based on path of solar irradiation, to increase the heating of the flowing medium downstream the deepest order.

Based on the structure of the body 8, inlet and the outlet of the flowing medium may be arranged on a same side of the body. It is not necessary to arrange the inlet of the flowing medium at the same side where the absorber is exposed to the solar radiation.

Although, the examples above have been given with reference to crowns as possible orders of units, further curvilinear or rectilinear orders of units may be defined and are covered by the scope of protection of the claims.

## Claims

1. A volumetric solar receiver (1) comprising a porous absorber (3) to be heated by solar radiation (7) and to transfer heat to a flowing medium (4) fed to said volumetric receiver, wherein:
the absorber (3) is arranged in the receiver (1) to be exposed to solar radiation (7),
the absorber (3) includes at least one region having a lattice structure (9), wherein said lattice structure (9) is made of a repetition in space of basic elements (10), the basic elements (10) are connected to each other to define units (11) of the structure (9), and the number of basic elements (10) per unit (11) is constant throughout said lattice structure (9);
in the lattice structure (9), said units (11) are arranged to form orders (12a, 12b) of units (11), wherein the orders of units (11) are arranged next to each other according to a depth (13) in the structure (9), wherein said depth (13) in the structure (9) is a distance from a surface (14) exposed to the solar radiation (7);
each pair of said orders (12a, 12b), comprising a first order (12a) and a second order (12b) next to each other, the second order (12b) being deeper than the first order (12a) in the structure (9), satisfies the following conditions:
a) in the second order (12b), that is deeper than the first order (12a), the units (11) are more densely arranged than in the first order (12a), so that the second order (12b) has a number of units (11) per length or number of units (11) per volume which is greater than the first order (12a),
**characterized by**:
b) each unit (11) of the first order (12a) has one or more basic element(s) (10') which is shared with a unit (11) of the second order (12b) wherein any basic element(s) (10') shared between a unit of the first order and a unit of the second order is shared along its entire extension between said units.

2. The solar receiver (1) of claim 1, wherein each unit (11) includes a plurality of connections (N) between basic elements (10) of the unit (11), wherein the number of connections (N) between basic elements (10) inside each unit (11) is the same.

3. The solar receiver (1) of claim 1, wherein each unit (11) in one of said orders (12a, 12b) is connected to at least another unit (11) in the same one of said orders (12a, 12b).

4. The solar receiver (1) of claim 3, wherein said each unit (11) and at least another unit (11) are connected by means of at least one basic element (10').

5. The solar receiver (1) of claim 4, wherein said at least one basic element (10') is shared along its entire extension between said each unit (11) and at least another unit (11) in said same one order (12a, 12b).

6. The solar receiver (1) of claim 3, wherein all the shared basic elements (10) of said each unit (11) are shared along their entire extension between other units (11) in said same one order or in another order.

7. The solar receiver (1) of claim 3, wherein each unit (11) is connected to another unit (11) in said same one order or in another order (12a, 12b) by means of at least one connection (N).

8. The solar receiver (1) of claim 7, wherein the number of connections (N) between each unit (11) and other units (11) in said same one order or in another order (12a, 12b) is the same.

9. The solar receiver (1) of claim 7, wherein said connection (N) between each unit (11) and other units (11) in said same one order or in another order (12a, 12b) is at an end or a vertex of a basic element (10).

10. The solar receiver (1) of claim 1, wherein each unit (11) is tapered in a direction of said depth (13).

11. The solar receiver (1) of claim 10, wherein said basic elements (11) are surfaces (11), and wherein said connections (N) are border regions (N) between said surfaces (11).

12. The solar receiver (1) of claim 1, including different type of orders (12a, 12b), said type including at least one among rows (12a, 12b), matrixes (15a,15b, 15c) or crowns (16a, 16b).

13. The solar receiver (1) of any of the previous claims, wherein all the basic elements (10) of each unit (11) of an intermediate order are shared along their entire extension with another unit (11) of the same order or of an adjacent order.

14. The solar receiver according to any of the previous claims wherein: the basic elements (10) are connected to each other to define unitary cells (11) of the structure (9), wherein the number of basic elements (10) and the number of connections and/or intersections between such basic elements, per each individual cell (11), is constant throughout the structure (9).

15. The solar receiver according to claim 14 wherein each individual cell (11) is connected to at least one neighboring cell in at least one point; there is at least one direction (13) according to which the spatial arrangement of the basic elements (10) and/or a size of the basic elements is modified to obtain a deformation of the unitary cells (11) so that the individual volume of the cells (11) decreases continuously along said direction (13), said direction points away from an outer region (14) of the absorber, which is a region arranged to be exposed to the solar radiation (7) when the receiver is in operation.

16. The solar receiver of claim 15 wherein the cells (11) are stretched, tapered or deformed throughout the structure.

17. The solar receiver of any of the previous claims wherein said basic elements of the structure are substantially mono-dimensional like linear elements or substantially bi-dimensional.

18. The solar receiver of any of the previous claims wherein the basic elements are linear elements connected at their ends, to form nodes (N); the nodes (N) delimit unitary cells (11) of a given morphology, such as cubic cells or cells of a more elaborate shape; the cells (11) are stretched or tapered so that their size decreases with the depth in the structure; adjacent cells share one or more struts (T) and shared struts are entirely in common between adjacent units (11), so that all struts (T) connect at their end points.

19. The solar receiver of claim 18 wherein each node (N) constitutes an end point of a linear element (T) and a vertex of a cell (11).

20. The solar receiver of any of the previous claims wherein each unitary cell (11) is one of the following: a cubic cell, a parallelepiped cell, a diamond cell, an octahedron cell or a kelvin cell, an octahedron, a truncated octahedron, a gyroid, a triply periodic minimal surface-based cell.

21. The solar receiver of any of the previous claims wherein a modification of the basic elements (10) to decrease the size and increase the spatial density of the unitary cells (11) includes any of: a uniform scaling, a non-uniform scaling, a deformation, a rotation or combinations thereof.

22. The solar receiver of any of the previous claim wherein the unitary cells (11) are non-uniformly scaled along three axes X, Y and Z defining an orthogonal reference system.

## Patentansprüche

1. Volumetrischer Solarempfänger (1) mit einem porösen Absorber (3), der durch Sonnenstrahlung (7) erwärmt wird und Wärme an ein fließendes Medium (4) überträgt, das dem volumetrischen Empfänger zugeführt wird, wobei:
der Absorber (3) in dem Empfänger (1) so angeordnet ist, dass er der Sonnenstrahlung (7) ausgesetzt ist,
der Absorber (3) mindestens einen Bereich mit einer Gitterstruktur (9) aufweist, wobei die Gitterstruktur (9) aus einer räumlichen Wiederholung von Grundelementen gemacht ist, die Grundelemente (10) miteinander verbunden sind, um Einheiten (11) der Struktur (9) zu definieren, und die Anzahl der Grundelemente (10) pro Einheit (11) über die gesamte Gitterstruktur (9) hinweg konstant ist;
in der Gitterstruktur (9) sind die Einheiten (11) so angeordnet, dass sie Anordnungen (12a, 12b) von Einheiten (11) bilden, wobei die Anordnungen von Einheiten (11) nebeneinander angeordnet sind gemäß einer Tiefe (13) in der Struktur (9), wobei die Tiefe (13) in der Struktur (9) ein Abstand von einer Oberfläche (14) ist, die der Sonnenstrahlung (7) ausgesetzt ist;
jedes Paar der Anordnungen (12a, 12b), das eine erste Anordnung (12a) und eine zweite Anordnung (12b) nebeneinander umfasst, wobei die zweite Anordnung (12b) tiefer als die erste Anordnung (12a) in der Struktur (9) ist, die folgenden Bedingungen erfüllt:
a) in der zweiten Anordnung (12b), die tiefer liegt als die erste Anordnung (12a), die Einheiten (11) dichter angeordnet sind als in der ersten Anordnung (12a), so dass die zweite Anordnung (12b) eine Anzahl von Einheiten (11) pro Länge oder eine Anzahl von Einheiten (11) pro Volumen aufweist, die größer ist als in der ersten Anordnung (12a),
**gekennzeichnet durch**:
b) jede Einheit (11) der ersten Anordnung (12a) ein oder mehrere Grundelement(e) (10') aufweist, die mit einer Einheit (11) der zweiten Anordnung (12b) geteilt werden, wobei jedes Grundelement/jede Grundelemente (10'), die zwischen einer Einheit der ersten Anordnung und einer Einheit der zweiten Anordnung geteilt werden, entlang ihrer gesamten Ausdehnung zwischen den genannten Einheiten geteilt ist.

2. Der Solarempfänger (1) nach Anspruch 1, wobei jede Einheit (11) eine Vielzahl von Verbindungen (N) zwischen Grundelementen (10) der Einheit (11) umfasst, wobei die Anzahl der Verbindungen (N) zwischen Grundelementen (10) innerhalb jeder Einheit (11) gleich ist.

3. Der Solarempfänger (1) nach Anspruch 1, wobei jede Einheit (11) in einer der Anordnungen (12a, 12b) mit mindestens einer anderen Einheit (11) in derselben der Anordnungen (12a, 12b) verbunden ist.

4. Der Solarempfänger (1) nach Anspruch 3, wobei jede Einheit (11) und mindestens eine weitere Einheit (11) mittels mindestens eines Grundelements (10') verbunden sind.

5. Der Solarempfänger (1) nach Anspruch 4, wobei das mindestens eine Grundelement (10') über seine gesamte Ausdehnung zwischen jeder Einheit (11) und mindestens einer weiteren Einheit (11) in derselben Anordnung (12a, 12b) geteilt wird.

6. Der Solarempfänger (1) nach Anspruch 3, wobei alle geteilten Grundelemente (10) jeder Einheit (11) entlang ihrer gesamten Ausdehnung zwischen anderen Einheiten (11) in derselben Anordnung oder in einer anderen Anordnung geteilt werden.

7. Der Solarempfänger (1) nach Anspruch 3, wobei jede Einheit (11) mit einer anderen Einheit (11) in derselben Anordnung oder in einer anderen Anordnung (12a, 12b) mittels mindestens einer Verbindung (N) verbunden ist.

8. Der Solarempfänger (1) nach Anspruch 7, wobei die Anzahl der Verbindungen (N) zwischen jeder Einheit (11) und anderen Einheiten (11) in derselben Anordnung oder in einer anderen Anordnung (12a, 12b) gleich ist.

9. Der Solarempfänger (1) nach Anspruch 7, wobei die Verbindung (N) zwischen jeder Einheit (11) und anderen Einheiten (11) in derselben Anordnung oder in einer anderen Anordnung (12a, 12b) an einem Ende oder einem Eckpunkt eines Grundelements (10) ist.

10. Der Solarempfänger (1) nach Anspruch 1, wobei jede Einheit (11) in Richtung der Tiefe (13) verjüngt ist.

11. Solarempfänger (1) nach Anspruch 10, wobei die Grundelemente (11) Flächen (11) sind und wobei die Verbindungen (N) Randbereiche (N) zwischen den Flächen (11) sind.

12. Der Solarempfänger (1) nach Anspruch 1, der verschiedene Arten von Anordnungen (12a, 12b) umfasst, wobei diese Arten mindestens eines der folgenden umfassen: Reihen (12a, 12b), Matrizes (15a, 15b, 15c) oder Kronen (16a, 16b).

13. Der Solarempfänger (1) nach einem der vorhergehenden Ansprüche, wobei alle Grundelemente (10) jeder Einheit (11) einer Zwischenanordnung entlang ihrer gesamten Ausdehnung mit einer anderen Einheit (11) derselben Anordnung oder einer benachbarten Anordnung geteilt werden.

14. Der Solarempfänger gemäß einem der vorhergehenden Ansprüche, wobei: die Grundelemente (10) miteinander verbunden sind, um einheitliche Zellen (11) der Struktur (9) zu definieren, wobei die Anzahl der Grundelemente (10) und die Anzahl der Verbindungen und/oder Schnittstellen zwischen diesen Grundelementen pro einzelner Zelle (11) über die gesamte Struktur (9) konstant ist.

15. Der Solarempfänger gemäß Anspruch 14, wobei jede einzelne Zelle (11) an mindestens einem Punkt mit mindestens einer benachbarten Zelle verbunden ist; es gibt mindestens eine Richtung (13), in der die räumliche Anordnung der Grundelemente (10) und/oder eine Größe der Grundelemente so verändert wird, dass eine Verformung der einheitlichen Zellen (11) erreicht wird, sodass das individuelle Volumen der Zellen (11) entlang dieser Richtung (13) kontinuierlich abnimmt, wobei diese Richtung von einem Außenbereich (14) des Absorbers weg zeigt, welches eine Region ist, die so angeordnet ist, dass sie der Sonnenstrahlung (7) ausgesetzt ist, wenn der Empfänger in Betrieb ist.

16. Der Solarempfänger nach Anspruch 15, wobei die Zellen (11) über die gesamte Struktur hinweg gestreckt, verjüngt oder verformt sind.

17. Der Solarempfänger nach einem der vorhergehenden Ansprüche, wobei die Grundelemente der Struktur im Wesentlichen eindimensional wie lineare Elemente oder im Wesentlichen zweidimensional sind.

18. Der Solarempfänger nach einem der vorstehenden Ansprüche, wobei die Grundelemente lineare Elemente sind, die an ihren Enden verbunden sind, um Knoten (N) zu bilden; die Knoten (N) begrenzen einheitliche Zellen (11) einer bestimmten Morphologie, wie beispielsweise kubische Zellen oder Zellen mit einer komplexeren Form; die Zellen (11) sind so gestreckt oder verjüngt, dass ihre Größe mit der Tiefe in der Struktur abnimmt; benachbarte Zellen teilen sich eine oder mehrere Streben (T) und die geteilten Streben sind vollständig zwischen benachbarten Einheiten (11) gemeinsam, so dass alle Streben (T) an ihren Endpunkten verbunden sind.

19. Der Solarempfänger nach Anspruch 18, wobei jeder Knoten (N) einen Endpunkt eines linearen Elements (T) und einen Eckpunkt einer Zelle (11) bildet.

20. Der Solarempfänger nach einem der vorhergehenden Ansprüche, wobei jede einheitliche Zelle (11) eine der folgenden ist: eine kubische Zelle, eine parallelepipedische Zelle, eine Diamantstruktur-Zelle, eine oktaedrische Zelle oder eine Kelvin-Zelle, ein Oktaeder, ein Stumpfoktaeder, ein Gyroid, eine dreifach periodische minimalflächenbasierte Zelle.

21. Der Solarempfänger nach einem der vorhergehenden Ansprüche, wobei eine Modifikation der Grundelemente (10) zur Verringerung der Größe und Erhöhung der räumlichen Dichte der einheitlichen Zellen (11) eines von umfasst: eine gleichmäßige Skalierung, eine ungleichmäßige Skalierung, eine Verformung, eine Drehung oder Kombinationen davon.

22. Der Solarempfänger nach einem der vorhergehenden Ansprüche, wobei die einheitlichen Zellen (11) entlang der drei Achsen X, Y und Z, die ein orthogonales Referenzsystem definieren, ungleichmäßig skaliert sind.

## Revendications

1. Récepteur solaire volumétrique (1) comprenant un absorbeur poreux (3) destiné à être chauffé par un rayonnement solaire (7) et à transférer la chaleur à un fluide circulant (4) alimenté dans ledit récepteur volumétrique, dans lequel :
l'absorbeur (3) est disposé dans le récepteur (1) de manière à être exposé au rayonnement solaire (7),
l'absorbeur (3) comprend au moins une région présentant une structure en treillis (9), dans lequel ladite structure en treillis (9) est constituée par une répétition dans l'espace d'éléments de base (10), les éléments de base (10) étant reliés entre eux pour définir des unités (11) de la structure (9), et le nombre d'éléments de base (10) par unité (11) étant constant dans ladite structure en treillis (9) ;
dans la structure en treillis (9), lesdites unités (11) sont disposées de manière à former des ordres (12a, 12b) d'unités (11), dans lequel les ordres d'unités (11) sont disposés côte à côte selon une profondeur (13) dans la structure (9), dans lequel ladite profondeur (13) dans la structure (9) est une distance à partir d'une surface (14) exposée au rayonnement solaire (7) ;
chaque paire desdits ordres (12a, 12b), comprenant un premier ordre (12a) et un second ordre (12b) disposés côte à côte, le second ordre (12b) étant plus profond que le premier ordre (12a) dans la structure (9), satisfait aux conditions suivantes :
a) dans le second ordre (12b), qui est plus profond que le premier ordre (12a), les unités (11) sont disposées plus densément que dans le premier ordre (12a), de sorte que le second ordre (12b) présente un nombre d'unités (11) par longueur ou un nombre d'unités (11) par volume est supérieur à celui du premier ordre (12a),
**caractérisé en ce que** :
b) chaque unité (11) du premier ordre (12a) présente un ou plusieurs élément(s) de base (10') partagé(s) avec une unité (11) du second ordre (12b), dans lequel tout élément de base (10') partagé entre une unité du premier ordre et une unité du second ordre est partagé sur toute son extension entre lesdites unités.

2. Récepteur solaire (1) selon la revendication 1, dans lequel chaque unité (11) comprend une pluralité de liaisons (N) entre des éléments de base (10) de l'unité (11), dans lequel le nombre de liaisons (N) entre éléments de base (10) à l'intérieur de chaque unité (11) est identique.

3. Récepteur solaire (1) selon la revendication 1, dans lequel chaque unité (11) d'un desdits ordres (12a, 12b) est reliée à au moins une autre unité (11) dans le même desdits ordres (12a, 12b).

4. Récepteur solaire (1) selon la revendication 3, dans lequel ladite chaque unité (11) et au moins une autre unité (11) sont reliées au moyen d'au moins un élément de base (10').

5. Récepteur solaire (1) selon la revendication 4, dans lequel ledit au moins un élément de base (10') est partagé sur toute son extension entre ladite chaque unité (11) et au moins une autre unité (11) dans ledit même ordre (12a, 12b).

6. Récepteur solaire (1) selon la revendication 3, dans lequel tous les éléments de base (10) partagés de ladite chaque unité (11) sont partagés sur toute leur extension entre d'autres unités (11) dans ledit même ordre ou dans un autre ordre.

7. Récepteur solaire (1) selon la revendication 3, dans lequel chaque unité (11) est reliée à une autre unité (11) dans ledit même ordre ou dans un autre ordre (12a, 12b) au moyen d'au moins une liaison (N).

8. Récepteur solaire (1) selon la revendication 7, dans lequel le nombre de liaisons (N) entre chaque unité (11) et d'autres unités (11) dans ledit même ordre ou dans un autre ordre (12a, 12b) est identique.

9. Récepteur solaire (1) selon la revendication 7, dans lequel ladite liaison (N) entre chaque unité (11) et d'autres unités (11) dans ledit même ordre ou dans un autre ordre (12a, 12b) se situe à une extrémité ou un sommet d'un élément de base (10).

10. Récepteur solaire (1) selon la revendication 1, dans lequel chaque unité (11) est effilée dans une direction de ladite profondeur (13).

11. Récepteur solaire (1) selon la revendication 10, dans lequel lesdits éléments de base (11) sont des surfaces (11), et dans lequel lesdites liaisons (N) sont des régions de bord (N) entre lesdites surfaces (11).

12. Récepteur solaire (1) selon la revendication 1, comprenant différents types d'ordres (12a, 12b), ledit type comprenant au moins un parmi des rangées (12a, 12b), des matrices (15a, 15b, 15c) ou des couronnes (16a, 16b).

13. Récepteur solaire (1) selon l'une quelconque des revendications précédentes, dans lequel : tous les éléments de base (10) de chaque unité (11) d'un ordre intermédiaire sont partagés sur toute leur extension avec une autre unité (11) du même ordre ou d'un ordre adjacent.

14. Récepteur solaire selon l'une quelconque des revendications précédentes dans lequel : les éléments de base (10) sont reliés entre eux pour définir des cellules unitaires (11) de la structure (9), dans lequel le nombre d'éléments de base (10) et le nombre de liaisons et/ou d'intersections entre ces éléments de base, pour chaque cellule individuelle (11), est constant dans toute la structure (9).

15. Récepteur solaire selon la revendication 14, dans lequel chaque cellule individuelle (11) est reliée à au moins une cellule voisine en au moins un point ; il existe au moins une direction (13) selon laquelle l'agencement spatial des éléments de base (10) et/ou une dimension des éléments de base est modifié afin d'obtenir une déformation des cellules unitaires (11) de sorte que le volume individuel des cellules (11) diminue de manière continue le long de ladite direction (13), ladite direction s'éloignant d'une région externe (14) de l'absorbeur, laquelle est une région disposée pour être exposée au rayonnement solaire (7) lorsque le récepteur est en fonctionnement.

16. Récepteur solaire (1) selon la revendication 15, dans lequel les cellules (11) sont étirées, effilées ou déformées dans toute la structure.

17. Récepteur solaire selon l'une quelconque des revendications précédentes, dans lequel lesdits éléments de base de la structure sont sensiblement monodimensionnels tels que des éléments linéaires ou sensiblement bidimensionnels.

18. Récepteur solaire selon l'une quelconque des revendications précédentes, dans lequel les éléments de base sont des éléments linéaires reliés à leurs extrémités, pour former des nœuds (N) ; les nœuds (N) délimitent des cellules unitaires (11) d'une morphologie donnée, telles que des cellules cubiques ou des cellules de forme plus élaborée ; les cellules (11) sont étirées ou effilées de sorte que leur dimension diminue avec la profondeur dans la structure ; des cellules adjacentes partagent un ou plusieurs montants (T) et les montants partagés sont entièrement en commun entre des unités adjacentes (11), de sorte que tous les montants (T) se rejoignent à leurs points d'extrémité.

19. Récepteur solaire selon la revendication 18, dans lequel chaque nœud (N) constitue un point d'extrémité d'un élément linéaire (T) et un sommet d'une cellule (11).

20. Récepteur solaire selon l'une quelconque des revendications précédentes, dans lequel chaque cellule unitaire (11) est l'une des suivantes : une cellule cubique, une cellule parallélépipédique, une cellule diamant, une cellule octaédrique ou une cellule de Kelvin, un octaèdre, un octaèdre tronqué, un gyroïde, une cellule basée sur une surface minimale triplement périodique.

21. Récepteur solaire selon l'une quelconque des revendications précédentes, dans lequel une modification des éléments de base (10) pour réduire la dimension et augmenter la densité spatiale des cellules unitaires (11) comprend l'une quelconque des opérations suivantes : un redimensionnement uniforme, un redimensionnement non uniforme, une déformation, une rotation ou des combinaisons de ceux-ci.

22. Récepteur solaire selon l'une quelconque des revendications précédentes, dans lequel les cellules unitaires (11) sont redimensionnées de manière non uniforme le long de trois axes X, Y et Z définissant un système de référence orthogonal.
